# EUROPEAN PATENT APPLICATION

(11) **EP 1 450 535 A1**
(43) Date of publication of application: **25.08.2004**
(21) Application number: 03003161.1
(22) Date of filing: 18.02.2003
(51) Int. Cl.: H04L 29/06, H04L 12/56

(54) **A relay for hierarchical retransmissions in multimedia streaming**

(71) Applicant: MATSUSHITA ELECTRIC INDUSTRIAL CO., LTD., Kadoma-shi, Osaka 571-8501 (JP)
(72) Inventor: Gu, Xiaoyuan, 64295 Darmstadt (DE); Hakenberg, Rolf, 64295 Darmstadt (DE); Rey, Jose Luis, 64287 Darmstadt (DE); Daiji, Ido, 1-14-13-104 Namiki, Kanazawaku (JP)
(74) Representative: Grünecker, Kinkeldey, Stockmair & Schwanhäusser Anwaltssozietät

(57) **Abstract**

This invention is related to a method for packet transmission in a media streaming environment, wherein a media server transmits data packets via a first link to a relay station and the relay station transmits the data packets via a second link to a destination terminal and to the relay station. In order to reduce the latency in loss recoveries by means of packet retransmissions in a media streaming environment via lossy wireless links, the invention introduces a rate adoption entity at the media server, an error processing entity and a local-loop retransmission entity at the relay station and a loss detection entity at the destination terminal. These entities allow to perform error handling at the different entities of the streaming environment that individually handle packet retransmission depending on where a data transmission error in the streaming environment occurred, thereby reducing latency in packet retransmission.

## Description

This invention is related to a method for packet transmission in a media streaming environment, wherein a media server transmits data packets via a first link to a relay station and the relay station transmits the data packets via a second link to a destination terminal. Further, the present invention relates to a relay station and its usage in a system comprising the relay station, a media server and a destination terminal in a media streaming environment.

The Real-time Transport Protocol (RTP), as defined by the Internet Engineering Task Force (IETF) in RFC 1889, is the de-facto standard that provides end-to-end network transport functions suitable for applications transmitting real-time data over multicast or unicast network services. It is augmented by the Real-time Control Protocol (RTCP) to allow monitoring of QoS of data delivery in a manner scalable to large multicast networks, and to provide minimal control and identification functionality. RTP does not address resource reservation issues and does not guarantee quality-of-service for real-time services.

RTP restricts the amount of feedbacks with two constrains. First, it is recommended that 5% of the session bandwidth be allocated to RTCP traffic, and this fraction is shared by all participants in a session. Second, the minimum RTCP report interval is recommended to be five seconds. All receivers in a session using their own fraction within this 5% to calculate their report interval and this interval to a large extend depends on and is directly proportional to the average RTCP packet size.

While these rules make RTP stable and usable for large multicast groups, it is not optimal for unicast or small-multicast scenarios. For the latter, more feedbacks per user would be beneficial and most likely possible. The problem was already identified and a new RTP profile is being standardized within IETF's Audio Video Transport Working Group (see Joerg Ott et al., "Extended RTP Profile for RTCP-based Feedback (RTP/AVPF)", Internet Draft, IETF, October 2002, available at http://www.ietf.org) . With the new profile the recommended minimum feedback interval of five seconds is not applied. Therefore the receiver can send earlier feedbacks, depending on the session parameters. The rule that the allocated RTCP session bandwidth must not be exceeded is still valid.

The RTCP bandwidth fraction is generally fixed at the recommended value of 5%. However a scheme is considered to change this fraction to some other values, or even turn RTCP feedback off. Other work in progress describes mechanisms to statically or dynamically calculate an optimal RTCP bandwidth fraction based on certain parameters, and modify RTCP bandwidth for a media session. Hence, the applications can benefit from more frequent feedbacks, while keeping the overhead low.

Video Streaming over the mobile Internet is gaining the momentum. However, the lossy behavior and long Round Trip Time (RTT) in wireless links make the deployment of this kind of application challenging enough. One reason is inter-frame video compression algorithms like MPEG-4 exploit temporal correlation between frames to achieve extremely high compression gain, but they also suffer from the well-known Propagation of Errors Effect, because errors in a reference frame propagate to all of the dependent difference frames.

Retransmission-based error resilience schemes like Jose Rey et al., "RTP Retransmission Payload Format", Internet Draft, IETF, February 2003, available at http://www.ietf.org, addresses this problem by retransmitting the high priority packets. However, to allow interactivity, this approach is challenged by the overall latency from two perspectives: the latency between the time when a packet loss is detected and the time that the receiver's feedback is allowed to sent and the latency due to at least a round-trip-time for the retransmitted packet to arrive at the receiver. These two latencies are non-trivial. Large latency will possibly cause the retransmitted packets to be too late to be displayable.

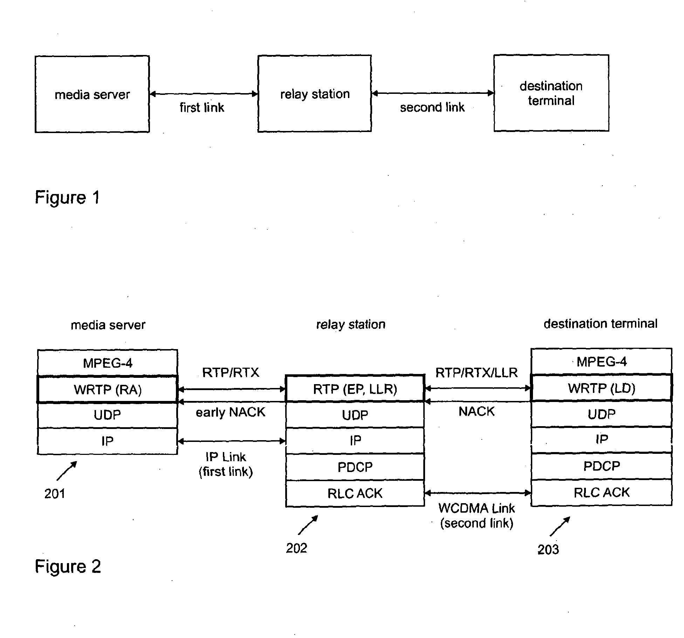

Fig. 1 shows a streaming environment and is used to illustrate the above-described problems in a conventional streaming environment. The streaming architecture can be divided into three instances: Media server, relay station and destination terminal. The media server (or streaming server) provides the content of a streaming session and delivers streaming data via the relay station (e.g. a base station or radio network controller) to the destination terminal, such as a mobile user equipment (mobile station). Hence, the data path of the streaming content can be separated into two links: a first link between the media server and the relay station and a second link between the relay station and the destination terminal. The first link is usually a reliable link, such as a wired link. The second link is an unreliable link, such as a wireless link. It has been observed that on the first link packet losses that result in packet retransmissions are very scarce and occur mainly due to network congestion. Bit-error related packet losses play a minor role. In contrast most of the bit-error related packet losses leading to packet retransmissions happen at the second unreliable link between the relay station and the destination terminal. In common packet retransmission it is necessary that all packet losses be signaled back to the sending source, i.e. the media server, which performs packet-retransmission. The feedbacks that report the packet loss to the media server have to travel from the destination terminal via the second link to the relay station and further via the first link to the media server and the retransmitted packets have to travel the whole way back to the destination terminal. Hence, the round-trip time is significant, which often results in data packets being delivered to the destination terminal at a time at which they are not needed any more and at which the retransmitted data packets have to be deleted after causing a significant traffic overhead, especially on the second unreliable link.

It is therefore the object of the present invention to provide a method reduce the latency in packet retransmissions in a media streaming environment. Further, it is the object of the present invention to solve the above stated problems without violating the rule of RTCP bandwidth fraction being not more then 5% of the available session bandwidth.

The present invention is based on the idea, that it is of advantage to perform error handling at the different entities of the streaming environment that individually handle packet retransmission depending on where a data transmission error in the streaming environment happened. An entity (rate adaptation entity) at the media server is responsible for congestion management oriented rate adaptation, with the goal of decreasing the data sending rate should a packet loss be caused by network congestion. An entity (ioss detection entity) at the mobile terminal is responsible for loss detection and signaling packet losses on the second link to the relay station. Entities (error processing entity and local-loop retransmission entity) at the relay station are responsible for maintaining a buffer for local-loop retransmissions (retransmissions on the second link) and packet loss detection, for dealing with congestion related losses in the wired network part (first link) and for issuing retransmission requests to the media server. Further, these entities are responsible for acting upon the signals from the destination terminal to perform local -loop retransmission for bit error oriented losses and losses due to handovers/mobility in the wireless link part.

The relay station, which operates e.g. at the RTP-level, forwards the data packets received via the first link, e.g. RTP and RTCP packets, intact. It operates in a session-transparent fashion, without breaking the end-to-end concept of media streaming using RTP. In this way, retransmission load is shared among a local-loop approach, i.e. packet retransmission on the second link and an end-to-end approach, i.e. packet retransmission via the first and second link. This liberates the media server from bit-error and mobility related retransmissions due to multiple parallel instances of local-loop retransmissions. Since bit error oriented losses and handover-related losses at the unreliable links have a significant contribution to the overall packet losses at the destination terminal, the local-loop approach is much faster due to avoiding the latency of at least a RTT between the relay station and the media server. Hence, this architecture represents an optimized approach for mobile multimedia streaming via lossy links and is capable to significantly reduce the latency in packet retransmission in a media streaming environment.

In accordance with the concept as outlined above, the present invention provides a method for packet transmission in a streaming environment (or architecture) comprising a media server, a relay station and a destination terminal for multimedia streaming, e.g. in an mobile IP-based streaming environment, over a unreliable link, such as a wireless link. The proposed method comprises signaling a detected packet loss to the media server from the relay station, detecting at the destination terminal a loss of at least one data packet received via the second link, signaling a detected packet loss to the relay station and retransmitting the at least one lost data packet either from the media server via the relay station or directly from the relay station to the destination terminal, in case a packet loss on the first link has been detected by the relay station or from the relay station to the destination terminal, in case a packet loss on the second link has been detected by the destination terminal.

For local-loop packet retransmissions, i.e. packet retransmissions on the second link, the relay station temporarily stores data packets successfully received on the first link for packet retransmissions related to packet losses on the second link.

It is of further advantage if sequence numbers of packets (such as contained in RTP packets) are assigned to the data packets to be transmitted from the media server to facilitate loss detection and retransmission processing at the relay station by maintaining a set of sequence numbers. Hence, the media server assigns a sequence number to each of the data packets transmitted from the media server and the relay station temporarily stores sequence numbers of data packets for which a packet loss has been signaled to the media server in a set of sequence numbers.

As the data which is signaled to the relay station in case the destination terminal detected a packet loss on the second link, includes at least one sequence number of the lost data packet, it is possible to search the at least one sequence number signaled from the destination terminal to the relay station in the set of stored sequence numbers and to decide whether packet retransmission of the data packets lost at the second link has been requested from the relay station to the media server.

In case the sequence number has not been found in the set of stored sequence numbers packet retransmission from the media server has been requested and the relay station does not need to perform further steps to handle packet loss processing on the second link.

The case in which the sequence number has been found in the set of stored sequence numbers implies that the lost packet signalled from the destination terminal to the relay station has been successfully received by the relay station and is therefore stored for possible retransmission at the relay station, e.g. in a retransmission buffer. Hence, retransmitting the lost data packet from the relay station to the destination terminal includes selecting at the relay station the lost data packet from the stored data packets for retransmission.

To enable rate adaptation of the transmission rate at the media server, it is of advantage if the relay station signals why the data packet has been lost. Therefore the relay station has to decide whether a detected packet loss on the first link is caused by a bit-error during transmission or by network congestion and has to signal the result to the media server. The media server may then reduce the transmission rate in case the relay station signalled that the detected packet loss on the first link was caused by network congestion.

Since packet switched data delivery does not guarantee that transmitted data packets are received in the same order as they are sent, it may be necessary that the relay station perform reordering of data packets received via the first link at the relay station, in case the data packets have been received out of order.

It is of further advantage to determine a packet loss in the relay station and the destination terminal based on sequence numbers of the received data packets.

In general, the inventive method can be employed for the transmission of data packets and for signaling using the Real-time Transport Protocol/Real-time Control Protocol and the Internet Protocol.

Further, the present invention provides a relay station in a media streaming environment, wherein a media server transmits data packets via a first link to the relay station and the relay station transmits the data packets via a second link to a destination terminal. The relay station comprises packet loss detection means for detecting a packet loss on the first link, signalling means for signalling a detected packet loss to the media server, error processing means for processing packet losses signalled from the destination terminal and local-loop or packet retransmission means for retransmitting data packets on the second link to the destination terminal.

The local-loop retransmission means may comprise a retransmission buffer for temporarily storing data packets for packet retransmission and is adapted to select the lost data packets signaled from the destination terminal from the retransmission buffer for packet retransmission.

It is further of advantage, if the error processing means includes a sequence number buffer for storing the sequence numbers of data packets for which a packet loss has been signalled to the media server by the signalling means and if the error processing means further includes a searching means for searching at least one sequence number of at least one data packet for which a packet loss has been signalled from the destination terminal in the sequence number buffer.

To reorder packets that have been received out of order at the relay station, the relay station further comprises packet reordering means for reordering data packets received via the first link.

Further the present invention provides a system for packet retransmission in a media streaming environment, comprising a media server, a relay station and a destination terminal for implementing the packet transmission method provided by this invention.

In the following the present invention is described in more detail in reference to the attached figures and drawings showing preferred embodiments of the invention. Similar or corresponding details in the figures are marked with same reference numerals.
- **Figure 1**: shows a conventional media streaming environment,
- **Figure 2**: shows a media streaming environment according to the present invention,
- **Figure 3**: shows a flow chart illustrating the operation of a loss detection (LD) entity of a destination terminal according to the present invention,
- **Figure 4**: shows a flow chart illustrating the operation of a error processing (EP) entity of a relay station according to the present invention and
- **Figure 5**: shows a flow chart illustrating the operation of a local-loop retransmission (LLR) entity of the relay station according to the present invention.

Fig. 2 shows the architecture of the media streaming environment according to the present invention. A media server 201 provides the streaming content to a destination terminal 203. The content is delivered from the media server 201 via the relay station 202 to the destination terminal 203. The layered structure in each of the three entities in the streaming environment is shown. On the highest layer, the media server 201 provides, for example, MPEG data from the application layer to the next lower layer WRTP. As will be explained in the following, this layer is especially adapted to provide extended functionality compared to conventional systems.

Therefore, the WRTP layer comprises a so-called rate adaptation (RA) entity, which is adapting the transmission data rate of the MPEG data stream depending on feedback (early NACK) from the relay station 202. In the present example, the streaming data are then provided to the UDP and IP layers before they are transmitted via a first link (in the preferred embodiment an IP level link) to the relay station 202. The relay station 202 operates on the RTP level layer for retransmission control. The arrow RTP/RTX indicates the level in the layered structure at which the media server 201 and relay station 202 are "interconnected" to provide the functionality of packet retransmission and rate adaptation.

In the preferred embodiment, the relay station 202 is connected to the destination terminal 203 via a W-CDMA link (second link). Therefore, besides providing the RTP, UDP and IP layers, the relay station 202 also provides a further PDCP (Packet Data Conversion Protocol) layer and RLC (Radio Link Control) layer. The RTP layer in the relay station 202 provides extended functionality by comprising an error processing (EP) entity and a local-loop retransmission (LLR) entity. As the name suggests, the error processing (EP) entity in the relay station 202 is responsible for error detection in data transmission on the first link and for indicating those errors to the media server 201 using an early NACK (Negative Acknowledgement) employing the RTP level connection between the relay station 202 and the media server 201.

The destination terminal 203 provides a similar layered structure as relay station 202, except that it comprises a WRTP layer having an extended functionality by providing a lost detection (LD) entity and a MPEG layer for receiving the MPEG data stream transmitted by the media server 201. Again, the package retransmission functionality in the relay station 202 and the package loss detection functionality in the destination terminal 203 are provided at the RTP level layer. Packet losses are reported using NACK messages, as will be explained in more detail in the following.

Loss detection in the present invention is split into two categories: The bit error added at any possible point before the wireless link (first link) and the bit errors produced in the last hop wireless link (second link) itself. Hence, the relay station 202 provides packet loss detection means (error processing entity) for detecting a packet loss on the first link, while the loss detection (LD) entity in the destination terminal 203 detects packet losses on the second link.

On the first link bit errors on this wired link part are rather rare. On the second unreliable link these errors are more likely. However, it is assumed that the physical layer, at both the relay station 202 (Base Transceiver Station/Node B) and the destination terminal 203 (User Equipment/Mobile Terminal), have a strong logic - based on a cyclic redundancy check (CRC) algorithm - to detect almost any bit errors introduced in the first and second links. The residual bit error rate, for the bit error undetected by the destination terminal's 203 physical layer, is marginal (equal or less than the level 1.0E-5) such that it can be ignored for practical purposes.

Depending on the UMTS Terrestrial Radio Access Network (UTRAN) lower layer's configuration, the physical layer discards any frame that fails the CRC check, without notify the upper layers. So, the upper layer usually can only see "clean" data packets and detects a packet loss based on the packets surviving the physical layer's cleanup (CRC check). All packet losses, whether caused by bit error or by network congestion, will appear to the upper layers simply as a packet loss.

In case of physical layer's CRC is turned on and after a sanity check - for detecting lost data packets based on their sequence numbers - has already been effectively done, it would be hard for the upper layers to determine the exact cause of a packet loss. Furthermore, it has to be pointed out that the checksum routine, compared to the CRC, is rather weak. Therefore, it is necessary to keep the loss detection function, but to move the loss differentiation function to a higher layer, e.g. the RTP level layer, in the relay station 202 and the destination terminal 203. This would efficiently address the aforementioned problem.

The loss detection function in the RTP-level loss detection (LD) entity at the destination terminal 203 operates by maintaining the state of the counter MAX_SN1 (Last Highest SN Received) as that used by the RTCP Receiver Report. For a received packet by accessing directly the sequence number (SN) field of the RTP header and comparing it with the Last Highest SN Received a packet loss is reported should a gap in the sequence numbers be observed. The loss detection (LD) entity at the destination terminal 203 signals this event to the local-loop retransmission (LLR) entity at the relay station 202, indicating the missing packets using their sequence numbers. The state of the Last Highest SN Received is also updated for each packet arrived at the mobile terminal should there be a need.

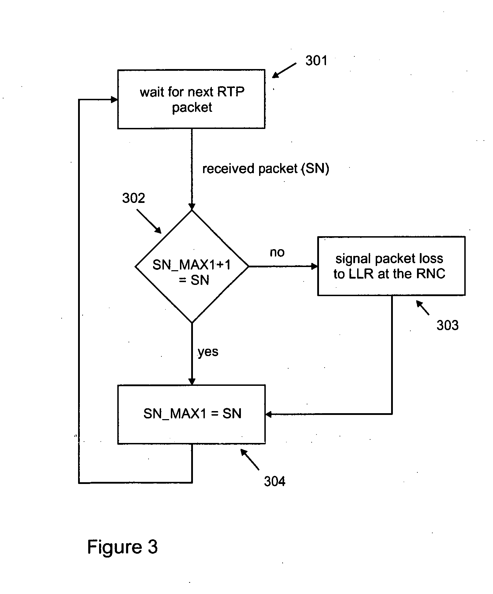

The described process is depicted in more detail in Fig. 3. In state 301 the destination terminal 203 waits for the next RTP packet provided by the lower layers to arrive. By comparing the sequence number of the received packet to the value of MAX_SN1+1 (see step 302) the destination terminal 203 can decide whether there is a gap in the sequence numbers of successively received data packets. If there are no missing data packets and the CRC check on the lower layers has been successful, the counter MAX_SN1 is updated (see step 304) and the terminal 203 awaits the next packet delivered from the lower layers (see step 301).

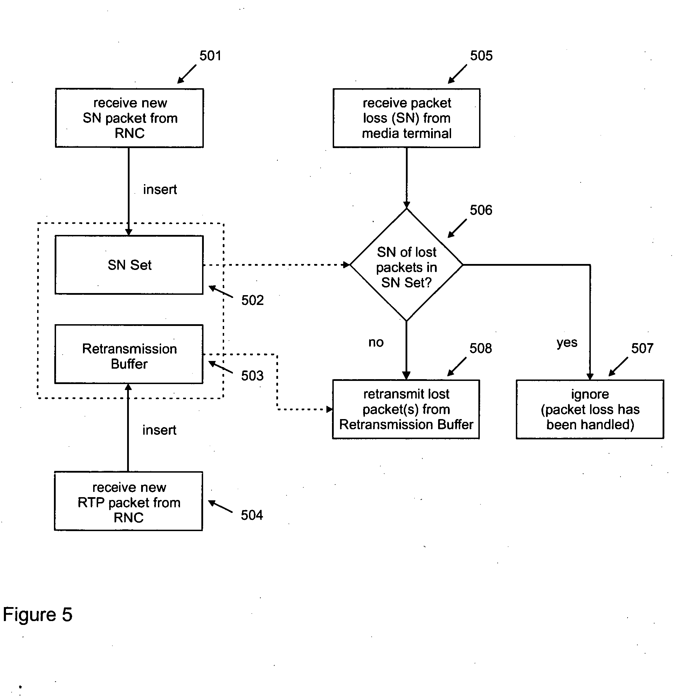

In case the destination terminal has detected missing data packets in step 302, the lost data packets are signaled to the relay station 202, in more detail to the local-loop retransmission entity (LLR) in step 303. The LLR in the relay station 202 will then handle the packet retransmission request as will be explained in reference to Fig. 5. After signaling the packet loss to the relay station 202, the counter MAX_SN1 is updated (see step 304) and the next RTP packet is processed upon arrival (step 301).

Next, the error processing (EP) entity in the relay station 202 will be discussed in more detail. The functionalities provided by the error processing (EP) entity of the relay station 202 can be summarized as follows: packet recording to reorder (or streamline) data packets got out of order in the wired network part (first link), packet loss detection against loss before the second link, optionally performing a sanity check against bit errors on the first link and signaling data packets lost on the first link to the media server 201 to request their retransmission. The packet loss signaled from the relay station 202 to the media server 201 embeds the type of error that led to the packet loss, such as bit errors or lost data packets due to congestion in the delivery network on the first link.

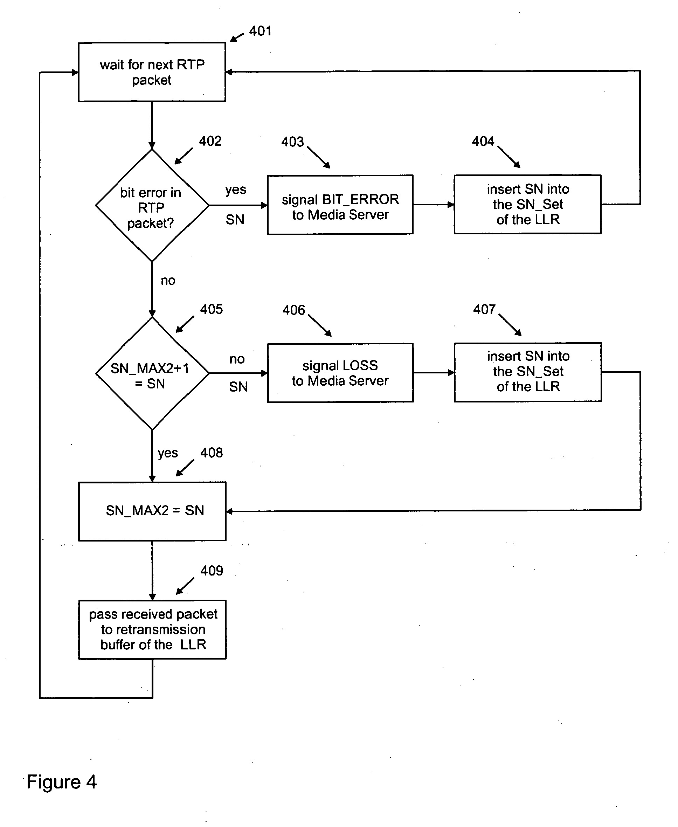

The functionality of this error processing means is shown in Fig. 4. The relay station 202 awaits the arrival of new data packets received via the first link in a step 401. For each coming packet from the server 201, the error processing (EP) entity performs a sanity check against the possible bit errors (step 402) contained in the current packet. This is inline with the IP Header Checksum and UDP Checksum mechanism. What needs to be pointed out here is that the residual bit error rate is extremely low in the wired network part (1.0E-9 for optic cable and 1.0E-6 for coaxial cable). Therefore the opportunity for the checksums to catch bit error is rather rare.

In case a bit error has been detected, an early negative acknowledgement (NACK) indicating the type of error (BIT_ERROR) is signalled to the media server 201 in step 403. Also in Fig. 2, this step is indicated by the arrow "early NACK" between the RTP level layer of relay station 202 and the WRTP level layer in the media server 201. If the sequence number SN of the data packets received the bit error can be determined, this sequence number is inserted into a sequence number set SN_set of the local-loop retransmission (LLR) entity in the relay station 202 (see step 404). After performing these steps, the error processing (EP) entity in the relay station (202) returns to step 401 and awaits the next data packets. In case an RTP packet has been received without a bit error, the process proceeds from step 402 to step 405.

The error processing (EP) entity maintains a counter MAX_SN2 (Last Highest SN Received). Under normal condition, MAX_SN2 should be a superset of MAX_SN1. In step 405, the value MAX_SN2+1 is compared to the sequence number of the packet received in step 401 to detect possible packet losses on the first link, e.g. by detecting a gap in the sequence numbers of successive data packets received at the relay station 202. The functionality provided for packet loss detection due to network congestion is comparable to the functionality of the loss detection (LD) entity in destination terminal 203 (see Fig. 3, steps 302, 303 and 304). In case the EP entity at the relay station 202 detects a packet loss due to network congestion, the packet loss indicating the missing or lost packets is signaled to the media server 201 to request packet retransmission. The embedded type of error (LOSS) in the signaling is indicating a packet loss due to network congestion to the media server 201 (see step 406).

The rate adaptation (RA) entity in the media server 201 is able to recognize the type of error determined by the relay station 202 and to perform rate adaptation of the transmission data rate of the streaming data accordingly. The rate adaptation performed by the media server 201 will be described in the following in more detail.

Next, the process proceeds to step 407 in which the sequence number/s of the missing or lost data packet/s is inserted to the sequence number set 502 (SN_Set) of the local-loop retransmission (LLR) entity of the relay station 202. This set 502 indicates by its contained sequence numbers which data packets lost or not delivered on the first link have already be handled, i.e. for which of the lost or missing data packets retransmission from the media server 201 has already been requested.

After inserting the lost or missing sequence numbers to the SN_Set (step 407) or after successfully receiving a data packet, i.e. a data packet that passed the bit-error check (step 402) and the sanity check for missing/lost data packets (step 405), the counter SN_MAX2 is updated in step 408 and the received data packet is inserted (PACKET_TO_BUFFER) into a retransmission buffer 503 of the local-loop retransmission (LLR) entity at the relay station 202. Finally, the process returns to step 401 and waits for the next data packet to be delivered to the relay station 202 via the first link.

As an IP based packet switched network does not guarantee to deliver data packets in the same order as they have been transmitted by the sender, it is of advantage to include a reordering buffer in the error processing (EP) entity of the relay station 202 in order to cope with packets which got out of order along the path between the media server 201 and the relay station 202. The size of the buffer depends on how severe out of ordering happens.

Next, the local-loop retransmission (LLR) entity in the relay station 202, which is responsible for error handling and packet retransmissions on the second, preferably wireless link is described in more detail. The LLR entity provides the following functionalities: maintaining a local retransmission buffer 503 for the bit error and handover loss related retransmissions, deciding how to handle packet losses reported by the loss detection (LD) entity of the destination terminal 203 and performing retransmissions by taking the related packet/s from the local retransmission buffer 503 if appropriate. The retransmission buffer maintenance is e.g. based on the FIFO queuing algorithm.

Fig. 5 shows the major steps performed by the local-loop retransmission (LLR) entity. The entity maintains the retransmission buffer 503 and the sequence number set 502. Upon receiving a new sequence number from the error processing (EP) entity in step 501, the sequence number is inserted into sequence number set 502. RTP data packets that are provided by the error processing (EP) entity with the PACKET_TO_BUFFER message are inserted into the local retransmission buffer 503 in step 504. The sequence number set 502 and the retransmission buffer 503 are used by the local-loop retransmission (LLR) entity to handle retransmission requests from the destination terminal 203.

Upon receiving a retransmission request (see step 505) from the destination terminal, the signaled sequence numbers, which indicate the packet/s lost on the second link the process, proceeds to step 506. The local-loop retransmission (LLR) entity checks whether the received sequence numbers of the lost data packets are contained in the sequence number set 502 (see step 506). If the sequence numbers are found in this set 502, packet retransmission from the media server 201 has already been requested by the error processing (EP) entity at the relay station 202 when performing error checking on the first link (see Fig. 4, steps 403 an 406).

As described before, in case a packet has not been received successfully via the first link and in case the sequence number of the erroneous data packets have been detected, the error processing (EP) entity at the relay station 202 inserts those sequence numbers into sequence number set 502 and requests retransmission from the media server 201.

Therefore, comparing the sequence number of loss data packets signaled by the destination terminal 203 to the local-loop retransmission (LLR) entity of the relay station 202 in step 506 allows to determine whether the relay station 202 has to act upon the retransmission request received by the destination terminal 203 or whether the retransmission request can be ignored, as the signal packet loss has already been processed by the error processing (EP) entity.

In the latter case, the process forwards to step 507. In case the signaled lost data packets from the destination terminal 203 have not been found in the sequence number set 502 in step 506, the process proceeds to step 508. It is implied that the data packets corresponding to these sequence numbers have been successfully received on the first link and, therefore, have been inserted into the retransmission buffer 503 at the relay station 202. Hence, the retransmission request can be handled by taking the indicated lost data packet from the retransmission buffer 503 for retransmitting the data packet/s to the destination terminal 203.

In case the data packets have been received successfully via the first link, all retransmission for data packets lost on the second link can be handled by the relay station 202 taking the lost data packet from the local retransmission buffer 503 for packet retransmissions.

After describing the three major introduced entities to the RTP level layer, namely the error processing (EP) entity, the local-loop retransmission (LLR) entity at the relay station 202 and the loss detection (LD) entity at destination terminal 203, the approach of the present invention with regard to handling retransmission in order to reduce the latency in those retransmissions can be summarized as follows: the concept of the present invention resides in differentiating between errors in packet transmissions on the first link between the media server 201 and relay station 202 or on the second link between relay station 202 and destination terminal 203.

Because of the different characteristics of the unreliable second link and the reliable first link, different error processing may be performed. Transmission errors on the first link are detected by the error processing (EP) entity of the relay station 202 and are signaled back to the media server 201 requesting the retransmission of the lost data packets. The sequence numbers of these lost data packets are inserted into the sequence number set 502. Data packets successfully received at the relay station 202 are inserted into the retransmission buffer 503 of the local-loop retransmission (LLR) entity and are used for packet retransmission in case those data packets are lost when forwarding them from the relay station 202 to the destination terminal 203.

Hence, in case the destination terminal 203 detects a packet loss using the loss detection (LD) entity and signals the packet loss to the local-loop retransmission (LLR) entity of relay station 202, the packets can either be retransmitted directly from the retransmission buffer 503 of the relay station 202 to the destination terminal 203 or their retransmission has already been requested, since the packet loss has already been handled by the error processing (EP) entity in the relay station 202.

The present invention allows to significantly reduce the latency in packet retransmissions, as most of the packet losses will occur on the second unreliable link between relay station 202 and destination terminal 203. As the lost data packets do not have to be retransmitted from the media server 201, but can be taken from the local retransmission buffer 503 at the relay station, the latency in handling retransmission requests from the destination terminal 203 can be greatly minimized.

The rate adaptation (RA) entity of the media server 201 acts upon the requests from the error processing (EP) entity of the relay station 202. It differentiates also two scenarios for retransmission requests due to congestion and retransmission requests due to bit errors before the wireless link. The latter is optional. For both cases, the entity will cause the media server 201 to retransmit the lost packets should the current bandwidth condition permits. However, the server 201 decreases the sending rate for data upon congestion related retransmission requests from the EP entity.

As shown in Fig. 4 in steps 403 and 406, the relay station signals the type of error to the media server 201 embedded in the report messages indicating a packet loss on the first link. In case a bit error related packet loss is detected by the error processing (EP) entity of the relay station 202, BIT_ERROR is signaled to the rate adaptation (RA) entity of the media server 201, in case of packet losses due to congestion LOSS is signaled. Hence, by analyzing the signaled type of error in the RA means at the media server 201, the server 201 may perform appropriate steps to deal with the packet losses. In particular, in case having received a reported packet loss due to congestion (LOSS) the media server 201 will then reduce the data rate of the media stream it transmits to the destination terminal 203.

Traditional congestion avoidance schemes like TCP's additive-increase/multiplicative-decrease (AIMD) can be used as they achieve high utilization. However, it also has a side effect in the sense that it causes large oscillations in transmission rates that degrade the smoothness and perceptual quality of the video stream.

Based on the understanding of interactions of a family of congestion control algorithms that Generalize AIMD, with buffer-based quality adaptation algorithms for hierarchically-encoded and simulcast video, non-AIMD algorithm with smaller oscillations than AIMD can be developed in order to cope with the congestion related management works.

## Claims

1. A method for packet transmission in a media streaming environment, wherein a media server transmits data packets via a first link to a relay station and the relay station transmits the data packets via a second link to a destination terminal, the method comprising the steps of:
detecting at the relay station a loss of at least one data packet received via the first link,
signaling a detected packet loss to the media server,
detecting at the destination terminal a loss of at least one data packet received via the second link,
signaling a detected packet loss to the relay station and
retransmitting the at least one lost data packet either from the media server via the relay station to the destination terminal, in case a packet loss on the first link has been detected by the relay station or from the relay station to the destination terminal, in case a packet loss on the second link has been detected by the destination terminal.

2. The method according to claim 1, further comprising the step of:
temporarily storing at the relay station data packets successful received by the relay station on the first link for packet retransmissions related to packet losses on the second link.

3. The method according to claim 1 or 2, further comprising the steps of:
assigning a sequence number to each of the data packets transmitted from the media server and
temporarily storing at the relay station sequence numbers of data packets for which a packet loss has been detected by the relay station and signaled to the media server in a set of sequence numbers.

4. The method according to claim 3, wherein the signaled data in the step of signaling a detected packet loss to the relay station includes at least one sequence number of the at least one lost data packet and
wherein the method further comprises the steps of
searching the at least one sequence number signaled from the destination terminal to the relay station in the set of stored sequence numbers and
deciding that packet retransmission of the data packets lost at the second link has been requested by the relay station to the media server, in case the at least one sequence number has been found in the set of stored sequence numbers.

5. The method according to one of claims 4, wherein the step of retransmitting the at least one lost data packet from the relay station to the destination terminal includes selecting at the relay station the at least one lost data packet from the stored data packets for retransmission.

6. The method according to one of claims 1 to 5, further comprising the steps of
deciding at the relay station whether a detected packet loss on the first link is caused by a bit-error during transmission or by network congestion and
signaling the result to the media server.

7. The method according to claim 6, further comprising the step of:
reducing at the media server the transmission rate in case the relay station signaled that the detected packet loss on the first link was caused by network congestion.

8. The method according to one of claims 1 to 7, further comprising the step of:
reordering data packets received via the first link at the relay station, in case the data packets have been received out of order.

9. The method according to claim 3, wherein the relay station and the destination terminal determine a packet loss based on sequence numbers of the received data packets.

10. The method according to one of claims 1 to 9, wherein the first link is a wired link and the second link is a wireless link.

11. The method according to one of claims 1 to 10, wherein the Real-time Transport Protocol/Real-time Control Protocol and the Internet Protocol are employed for the transmission of data packets and for signaling.

12. A relay station in a media streaming environment, wherein a media server transmits data packets via a first link to the relay station and the relay station transmits the data packets via a second link to a destination terminal, the relay station comprising:
packet loss detection means for detecting a packet loss on the first link,
signaling means for signaling a detected packet loss to the media server
error processing means for processing packet losses signaled from the destination terminal and
packet retransmission means for retransmitting data packets on the second link to the destination terminal.

13. The relay station according to claim 12, wherein the packet retransmission means comprises a retransmission buffer for temporarily storing data packets for packet retransmission and
is adapted to select the lost data packets signaled from the destination terminal from the retransmission buffer for packet retransmission.

14. The relay station according to claim 12 or 13, wherein the error processing means includes a sequence number buffer for storing the sequence numbers of data packets for which a packet loss has been signaled to the media server by the signaling means.

15. The relay station according to claim 14, wherein the error processing means further includes a searching means for searching at least one sequence number of at least one data packet for which a packet loss has been signaled from the destination terminal in the sequence number buffer.

16. The relay station according to one of claims 12 to 15, further comprising packet reordering means for reordering data packets received via the first link, in case the data packets have been received out of order.

17. A system for packet retransmission in a media streaming environment, comprising a media server, a relay station and a destination terminal for implementing the steps of one of claims 1 to 11.
